# EUROPEAN PATENT SPECIFICATION

(11) **EP 4 496 139 B1**
(45) Date of publication and mention of the grant of the patent: **29.10.2025**
(21) Application number: 24187357.9
(22) Date of filing: 09.07.2024
(51) Int. Cl.: H01R 13/621, F16B 5/02, F16B 35/04, H01R 13/74

(54) **CONNECTOR ASSEMBLY AND METHOD OF ASSEMBLING SUCH A CONNECTOR ASSEMBLY**
VERBINDERANORDNUNG UND VERFAHREN ZUR MONTAGE SOLCH EINER VERBINDERANORDNUNG
ENSEMBLE CONNECTEUR ET PROCÉDÉ D'ASSEMBLAGE D'UN TEL ENSEMBLE CONNECTEUR

(30) Priority: 15.07.2023 EP 23185705
(43) Date of publication of application: 22.01.2025
(73) Proprietor: Aptiv Technologies AG, 8200 Schaffhausen (CH)
(72) Inventor: GUILLANTON, Melanie, 28230 Epernon (FR); ZHAO, Ked, 201814 Shanghai (CN); BHATTACHARJEE, Tanuraj, Silchar (IN); MORIN, Laurent, 78120 Rambouillet (FR)
(74) Representative: INNOV-GROUP

(56) References cited:
- DE-A1- 102018 222 103
- US-A1- 2007 177 959

## Description

### Technical field

This disclosure relates to the field of automotive connectors and, for example, to the field of power connectors for automotive applications.

### Background

There are connector assemblies comprising a connector (e.g., a header) and a counter-connector (e.g. a plug) to be mated to the connector, wherein the connector has a housing configured to be mounted to a support such as an appliance, a structural element of a vehicle, etc.. Then, one or several screws may be used to secure the housing to its support, and another screw or several other screws may be used to secure the connector to the counter-connector.

Assembling these connectors therefore generally involves placing and screwing the connector onto its support, then placing and screwing the counter-connector onto the connector and/or the support. This type of connector assembly has drawbacks. For example, the room taken up by all the screws requires relatively large connector housings. Accordingly, there is a need for improving at least partially such connector assemblies and their assembly and mounting processes onto a support.

DE 10 2018 222103 A1 discloses a connector assembly and method according to the preamble of claim 1, respectively. US 2007/177959 A1 discloses a stud bolt.

### Summary

A connector assembly according to claim 1 is described below, which at least partially helps to overcome at least some of the drawbacks of the prior art.

Indeed, a same securing member (or fastening element) is used to both secure the connector onto the support and to secure the counter-connector onto the connector. Therefore, instead of providing enough room in the connector for two different fastening elements (e.g., two different screws), i.e., one to secure the connector onto the support and one to secure the counter-connector onto the connector, it is sufficient to provide room for only one single fastening element. Of course, several securing members can be used for securing the connector, the counter-connector and the support together, but at least one securing member may replace two fastening elements.

This connector also optionally comprises one and/or other of the features mentioned in claims 2 to 10, each considered independently of the other or in combination with one or more others.

Also described below is a method of assembling a connector assembly, according to claims 11 and 12.

### Brief description of the drawings

Further features and advantages will become apparent in the detailed disclosure of an example embodiment of a connector assembly, as well as variations of this embodiment, this disclosure being accompanied by references to the accompanying drawings.
Figure 1 shows a schematic perspective view of an example of a connector secured to a support;
Figure 2 shows schematically in perspective and in cross-section a portion of the connector and the support of Figure 1;
Figure 3 shows a schematic perspective view of a connector assembly comprising a counter-connector secured onto the connector and the support illustrated in figure 1; and
Figure 4 shows schematically in perspective and in cross-section a portion of the connector assembly of Figure 3.

### Detailed description of an embodiment example

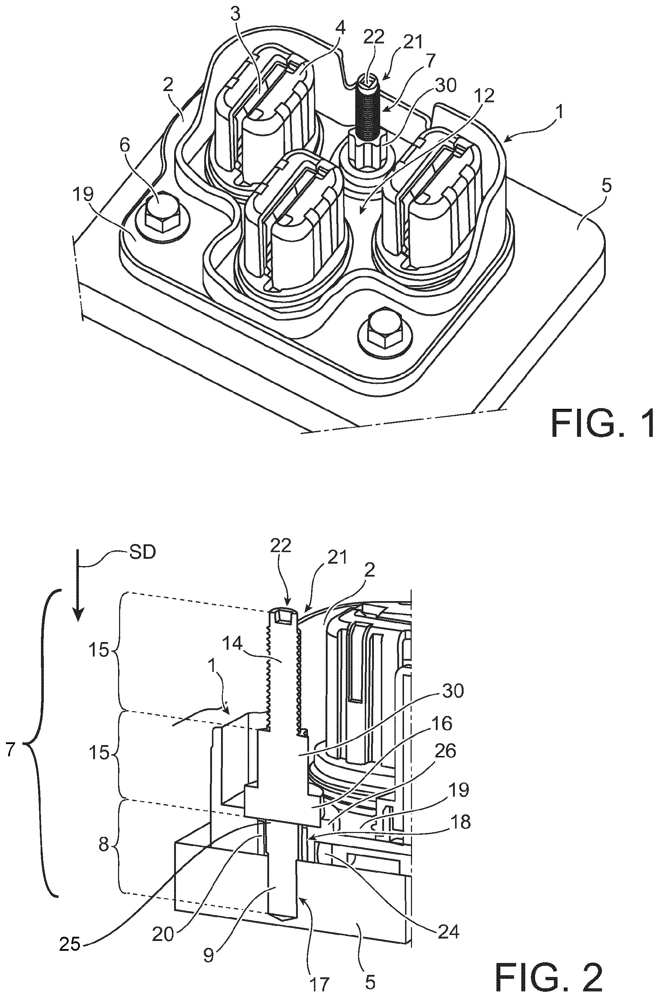

An example embodiment of a connector 1 is shown in Figure 1. This connector 1 is used for example in an electrical power circuit of a motor vehicle. Such a circuit is used, for example, to interconnect components such as a connection bar, a battery, a charging station, a converter, an electric motor, etc.

In the illustrated example, the connector 1 is a header.

The connector 1 comprises a connector housing 2. In this example, the connector housing 2 accommodates three power terminals 3 (at least one of these power terminals 3 corresponds to said "at least one first electrical terminal recited in the claims). In the illustrated example, each power terminal 3 is protected by a cap 4. The housing 2 and the caps 4 are made, for example, of molded plastics (dielectric plastics). The power terminals 3 are made, for example, of a copper alloy (alternatively they are made of aluminium alloy or of another conductive material).

In this illustrated example, the housing 2 is secured onto a support 5 with the help of two screws 6 and one securing member 7. In alternative embodiments, the number of screws 6 and/or securing member 7 may vary. The screws 6 are made, for example, of steel zinc-nickel plated. The securing member 7 is made, for example, of steel zinc-nickel plated. The securing member 7 is essentially positioned in a triangular area 12 left free between the three protection caps 4. In other words, the securing member 7 does not take up extra space in the connector 1, which would otherwise have required an increase of the size of the connector housing 2.

As shown in figure 2, the securing member 7 passes through a cylindrical passage 18 provided through a plate 19 of the connector housing 2. More particularly, the securing member 7 passes through a cylindrical standoff ring 20 inserted in the cylindrical passage 18. For example, the cylindrical standoff ring 20 is made of metal. Since the connector housing 2 is made of plastics, the cylindrical standoff ring 20 provides a reinforcement that prevents the housing plate 19 from breaking when the securing member 7 clamps the connector 1 onto the support 5.

The securing member 7 comprises a first securing section 8 configured to secure the connector 1 onto the support 5. In the illustrated example, the first securing section 8 comprises a first threaded portion 9. The first threaded portion 9 is at least partially screwed into a complementary threaded hole 17 of the support 5. In alternative embodiments, the first securing section 8 comprises any securing means which are adapted to secure the connector 1 to the support 5. For example, such securing means can be configured to be inserted in force or press-fitted in a hole, to cooperate with a self-retaining ring, etc.

The securing member 7 further comprises a second securing section 13. In the illustrated example, the second securing section 13 comprises a second threaded portion 14. In alternative embodiments, the second securing section 13 comprises any securing means which are adapted to secure the connector 1 and a counter-connector 10 to each other. For example, such securing means may consist of complementary snapping means, latching means, locking means, etc.

In the illustrated example, the securing member 7 comprises a standoff section 15 between the first 8 and second 13 securing sections. In the illustrated example, the standoff section 15 comprises a nut section 30 configured to screw the securing member 7, in the support 5, on the plate 19. The nut section 30 can have any suitable shape for tightening the securing member 7 onto the support 5 (e.g., Hex or Torx compatible shape), the standoff section 15 comprises a ring section 16. The ring section 16 is configured to cooperate with the connector housing 2 (e.g., the plate 19 of the connector housing 2) to hold the connector 1 onto the support 5. The ring section 16 is formed as a single piece with the remaining sections 8, 15 and 13 of the securing member 7. The ring section 16 rests on the cylindrical standoff ring 20 and/or on an annular surface of the connector housing 2, which surrounds the cylindrical passage 18. In the illustrated example, this annular surface is itself surrounded by an annular rib 26. The rib 26 guides the ring section 16 and ensures a precise positioning of the connector 1 on the support 5. The rib 26 is also located above a seal 24 surrounding a region of the plate 19 comprising the terminals 3 of the connector 1. The rib 26 then acts as a reinforcing structure which ensures that the plate 19 is flat and that there is a good seal between the plate 19 and the support 5.

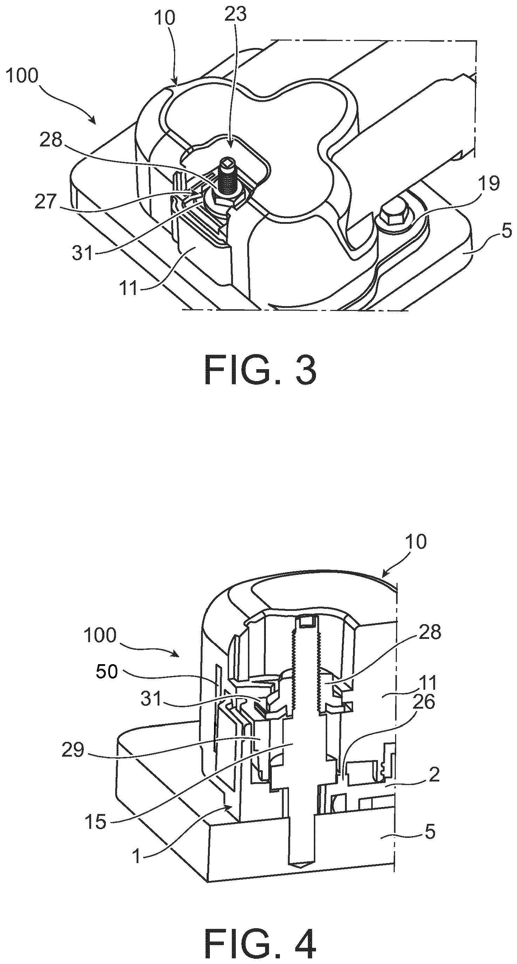

The ring section 16 is thick enough (in direction parallel to the longitudinal direction of the securing member 7, which also corresponds to a securing direction SD when the assembly is performed) so that an alignment structure 29 of the counter-connector or plug 10 can be guided by the ring section 16, when the counter-connector 10 is mated with the connector 1 (see figure 4).

The securing member 7 comprises a free end 21 located on a same side as the second threaded portion 14 (see figure 2). The free end 21 comprises a screwing structure 22 whose shape is complementary to that of a spanner or screwdriver.

In summary, the securing member 7 extends longitudinally between two free ends and comprises from a free end to the other: the first threaded portion 9, an intermediate portion 25, the ring section 16, the standoff section 15, the second threaded portion 14 and the free end 21 comprising the screwing structure 22. All this portions and sections form a single piece. This provides the advantage of simplifying the assembly process of the connector 1 and the counter-connector 10 onto the support 5. This also simplifies the sourcing and supply chain logistics because there are less parts to manage.

As shown in figure 3, the counter-connector 10 is mounted on the connector 1. The counter-connector 10 comprises a counter-connector housing 11. In the illustrated example, the counter-connector 10 is a plug connector (e.g., a female connector). The counter-connector 10 is a cable connector. It accommodates three power terminals (not shown), each electrically and mechanically connected to a cable. The cables extend perpendicular to the mating direction. The cables are power cables with a relatively large section. The cables are relatively stiff and heavy.

As shown in figure 3, the counter-connector 10 comprises a hollow 23. The hollow 23 is essentially located in a region corresponding, in the connector 1, to the triangular area 12. A ring 31 is mounted on the counter-connector 10. The counter-connector 10 has retaining means 27 to retain the ring 31. For example, the ring 31 has a rectangular plate-like shape configured to be guided when inserted onto the counter-connector 10. The ring 31 has an internal shape around a hole so as to enable the retention of a nut 28 on the ring 31 after a specific crimping. The retaining means 27 are flexibles so as to facilitate the insertion of the ring 31 and the nut 28 onto the counter-connector 10, in one direction (a chamfered portion helps the insertion), and so as to make it more difficult to remove it in the opposite direction. The retaining means 27 hold the ring 31 and the nut 28 captive. Therefore, the ring 31 and the nut 28 are mounted and held on the counter-connector 10. For example, the counter-connector 10 is supplied at a harness maker (i.e., the manufacturer carrying out the assembly of the cables with the terminals, as well as the mounting of the terminals in the counter-connector 10). This is an advantage in that there is no risk of the nut 28 being lost. It also simplifies the supply chain, as there are fewer separate elements to manage. The nut 28 is screwed on the second threaded portion 14 and tightened on the ring 31 (alternatively any other appropriate fastening means may be used instead of the nut 28 and the threaded portion 14). The nut 28 and the ring 31 are located in the hollow 23 so that they do not clutter up the environment of the connector assembly 100.

As shown in figure 4, the standoff section 15 allows to block the ring 31 and the nut 28 and therefore prevents the connector housing 2 to be deformed and/or broken.

On the one hand, as mentioned above, the counter-connector 10 (with its cables, terminals, ring 31 and nut 18) can be prepared by a harness maker.

On the other hand, the connector 1 can be directly supplied to car manufacturer. In other words, car manufacturer can be supplied with the connector 1 and the securing member 7 by the manufacturer of the connector 1 and can be supplied with the counter-connector 10 by a harness maker. The assembly of the connector 1 with the counter-connector 10 is then quite easy for the car manufacturer.

For assembling the connector 1 and the counter-connector 10 on the support 5, the following steps are carried out:
- placing the connector 1 onto the support 5,
- securing the connector 1 onto the support 5 with the help of the securing member 7 and the screws 6,
- placing the connector 1 and the counter-connector 10 so that the terminals of the connector 1 and the counter-connector 10 are aligned in a premating position, and so that the counter-connector 10 is in a position relative to the securing member 7, which is adapted to engage the nut 28 on the securing member 7,
- screwing the nut 28 on the second threaded portion 14 so as to clamp the connector housing 2 and the counter-connector housing 11 between the support 5 and the ring 31. Screwing the nut 28 on the second threaded portion 14 assists the mating of the connector 1 and counter-connector 10, and their respective terminals.

So as to help the connector 1 and counter-connector 10 to be well aligned before and during screwing the nut 28 on the second threaded portion 14, the connector 1 and counter-connector 10 have complementary sliding means 50. The sliding means 50 acts as a "third hand". Indeed, as the cables are stiff and heavy, the sliding means 50 helps maintaining the connector 1 and counter-connector 10 in a premating position before the above-mentioned screwing step and helps aligning the connector 1 and counter-connector 10 so as to ease the screwing and to avoid damaging the respective threads of the nut 28 and the second threaded portion 14.

## Claims

1. A connector assembly (100) comprising a support (5), a connector (1), a counter-connector (10) and at least one securing member (7) extending longitudinally along a securing direction (SD), wherein
- the support (5) is configured to receive the connector (1),
- the connector (1) comprises a connector housing (2) to accommodate at least one first electrical terminal (3), and
- the counter-connector (10) is configured to mate the connector (1) and comprises a counter-connector housing (11) to accommodate at least one second electrical terminal configured to be connected to said at least one first electrical terminal (3), **characterized in that** said at least one securing member (7) comprises a first securing section (8) configured to secure the connector (1) onto the support (5) and a second securing section (13) configured to secure the counter-connector (10) onto the connector (1).

2. A connector assembly according to claim 1, wherein the first securing section (8) comprises a first threaded portion (9) configured to be screwed onto the support (5).

3. A connector assembly according to claim 1 or 2, wherein the second securing section (13) comprises a second threaded portion (14) configured to be screwed with a nut (28) to hold the counter-connector (10) mated to the connector (1).

4. A connector assembly according to any one of the preceding claims, wherein said at least one securing member (7) comprises a standoff section (15) between the first (8) and second (13) securing sections.

5. A connector assembly according to claim 4, wherein the standoff section (15) comprises a nut section (30) forming a single piece with said at least one securing member (7).

6. A connector assembly according to claim 5, wherein the standoff section (15) comprises a ring section (16) configured to cooperate with the connector (1) to hold the connector (1) onto the support (5), the ring section (16) forming a single piece with said at least one securing member (7).

7. A connector assembly according to any one of the preceding claims, wherein said at least one securing member (7) comprises a free end (21) located on a same side as the second threaded portion (14), said free end (21) comprising a screwing structure (22) whose shape is complementary to that of a spanner or screwdriver.

8. A connector assembly according to any one of the preceding claims, wherein the counter-connector (10) comprises retaining means (27) configured to retain a ring (26) on which a nut (28) is tightened when it is screwed onto the second threaded portion (14).

9. A connector assembly according the claim 8, wherein the retaining means (27) hold the nut (28) captive.

10. A connector assembly according to any one of the preceding claims, comprising a seal (24) inserted between the connector housing (2) and the support (5).

11. A method of assembling a connector (1) and a counter-connector (10) with a support (5), comprising
- placing the connector (1) onto the support (5),
- securing the connector (1) onto the support (5) with the help of at least one securing member (7),
- placing the connector (1) and the counter-connector (10) so that at least one first terminal (3) accommodated in the connector (1) and at least one second terminal accommodated in the counter-connector (10) are in a premating position, and so that the counter-connector (10) is in a position relative to said at least one securing member (7), which is adapted to engage a fastener (28) on said at least one securing member (7),
- securing a first securing section (8) of said at least one securing member (7) onto the support (5) so as to secure the connector (1) onto the support (5) and securing the counter-connector (10) onto the connector (1) with the fastener (8) engaged onto a second securing section (13) of said at least one securing member (7).

12. A method according to claim 11, wherein the fastener (28) is a nut and wherein said at least one first terminal (3) and said at least one second terminal are connected while the nut (28) is screwed on said at least one securing member (7).

## Patentansprüche

1. Eine Steckverbinderanordnung (100), umfassend einen Träger (5), einen Steckverbinder (1), einen Gegensteckverbinder (10) und mindestens ein Befestigungselement (7), das sich in Längsrichtung entlang einer Befestigungsrichtung (SD) erstreckt, wobei
- der Träger (5) zur Aufnahme des Steckverbinders (1) ausgebildet ist,
- der Steckverbinder (1) ein Steckverbindergehäuse (2) zur Aufnahme mindestens eines ersten elektrischen Anschlusses (3) umfasst, und
- der Gegensteckverbinder (10) zum Zusammenstecken mit dem Steckverbinder (1) ausgebildet ist und ein Gegensteckverbindergehäuse (11) zur Aufnahme mindestens eines zweiten elektrischen Anschlusses umfasst, der zum Verbinden mit dem mindestens einen ersten elektrischen Anschluss (3) ausgebildet ist,
**dadurch gekennzeichnet, dass** das mindestens eine Befestigungselement (7) einen ersten Befestigungsabschnitt (8), der zum Befestigen des Steckverbinders (1) auf dem Träger (5) ausgebildet ist, und einen zweiten Befestigungsabschnitt (13) umfasst, der zum Befestigen des Gegensteckverbinders (10) auf dem Steckverbinder (1) ausgebildet ist.

2. Steckverbinderanordnung nach Anspruch 1, wobei der erste Befestigungsabschnitt (8) einen ersten Gewindeabschnitt (9) umfasst, der zum Aufschrauben auf den Träger (5) ausgebildet ist.

3. Steckverbinderanordnung nach Anspruch 1 oder 2, wobei der zweite Befestigungsabschnitt (13) einen zweiten Gewindeabschnitt (14) umfasst, der dazu ausgebildet ist, mit einer Mutter (28) verschraubt zu werden, um den mit dem Steckverbinder (1) zusammengesteckten Gegensteckverbinder (10) zu halten.

4. Steckverbinderanordnung nach einem der vorhergehenden Ansprüche, wobei das mindestens eine Befestigungselement (7) einen Abstandsabschnitt (15) zwischen dem ersten (8) und dem zweiten (13) Befestigungsabschnitt umfasst.

5. Steckverbinderanordnung nach Anspruch 4, wobei der Abstandsabschnitt (15) einen Mutternabschnitt (30) umfasst, der einstückig mit dem mindestens einen Befestigungselement (7) ausgebildet ist.

6. Steckverbinderanordnung nach Anspruch 5, wobei der Abstandsabschnitt (15) einen Ringabschnitt (16) umfasst, der zum Zusammenwirken mit dem Steckverbinder (1) ausgebildet ist, um den Steckverbinder (1) auf dem Träger (5) zu halten, wobei der Ringabschnitt (16) einstückig mit dem mindestens einen Befestigungselement (7) ausgebildet ist.

7. Steckverbinderanordnung nach einem der vorhergehenden Ansprüche, wobei das mindestens eine Befestigungselement (7) ein freies Ende (21) umfasst, das sich auf derselben Seite wie der zweite Gewindeabschnitt (14) befindet, wobei das freie Ende (21) eine Schraubstruktur (22) umfasst, deren Form komplementär zu der eines Schraubenschlüssels oder Schraubendrehers ist.

8. Steckverbinderanordnung nach einem der vorhergehenden Ansprüche, wobei der Gegensteckverbinder (10) Haltemittel (27) umfasst, die dazu ausgebildet sind, einen Ring (26) zu halten, auf dem eine Mutter (28) angezogen wird, wenn sie auf den zweiten Gewindeabschnitt (14) geschraubt wird.

9. Steckverbinderanordnung nach Anspruch 8, wobei die Haltemittel (27) die Mutter (28) unverlierbar halten.

10. Steckverbinderanordnung nach einem der vorhergehenden Ansprüche, umfassend eine Dichtung (24), die zwischen dem Steckverbindergehäuse (2) und dem Träger (5) eingesetzt ist.

11. Ein Verfahren zum Montieren eines Steckverbinders (1) und eines Gegensteckverbinders (10) mit einem Träger (5), umfassend:
- Platzieren des Steckverbinders (1) auf dem Träger (5),
- Befestigen des Steckverbinders (1) auf dem Träger (5) mit Hilfe mindestens eines Befestigungselements (7),
- Platzieren des Steckverbinders (1) und des Gegensteckverbinders (10), so dass sich mindestens ein erster Anschluss (3), der im Steckverbinder (1) aufgenommen ist, und mindestens ein zweiter Anschluss, der im Gegensteckverbinder (10) aufgenommen ist, sich in einer Vormontageposition befinden, und so, dass der Gegensteckverbinder (10) sich in einer Position relativ zu dem besagten mindestens einen Befestigungselement (7) befindet, das dazu ausgebildet ist, ein Befestigungsmittel (28) an dem besagten mindestens einen Befestigungselement (7) in Eingriff zu bringen,
- Befestigen eines ersten Befestigungsabschnitts (8) des besagten mindestens einen Befestigungselements (7) auf dem Träger (5), um so den Steckverbinder (1) auf dem Träger (5) zu sichern, und Sichern des Gegensteckverbinders (10) auf dem Steckverbinder (1) mit dem Befestigungsmittel (8), das mit einem zweiten Befestigungsabschnitt (13) des besagten mindestens einen Befestigungselements (7) in Eingriff steht.

12. Ein Verfahren nach Anspruch 11, wobei das Befestigungsmittel (28) eine Mutter ist und wobei der besagte mindestens eine erste Anschluss (3) und der besagte mindestens eine zweite Anschluss verbunden werden, während die Mutter (28) auf das besagte mindestens eine Befestigungselement (7) aufgeschraubt wird.

## Revendications

1. Ensemble connecteur (100) comprenant un support (5), un connecteur (1), un contre-connecteur (10) et au moins un élément de fixation (7) s'étendant longitudinalement le long d'une direction de fixation (SD), dans lequel
- le support (5) est configuré pour recevoir le connecteur (1),
- le connecteur (1) comprend un boîtier de connecteur (2) pour loger au moins une première borne électrique (3), et
- le contre-connecteur (10) est configuré pour s'accoupler avec le connecteur (1) et comprend un boîtier de contre-connecteur (11) pour loger au moins une deuxième borne électrique configurée pour être connectée à ladite au moins une première borne électrique (3),
**caractérisé en ce que** ledit au moins un élément de fixation (7) comprend une première section de fixation (8) configurée pour fixer le connecteur (1) sur le support (5) et une seconde section de fixation (13) configurée pour fixer le contre-connecteur (10) sur le connecteur (1).

2. Ensemble connecteur selon la revendication 1, dans lequel la première section de fixation (8) comprend une première portion filetée (9) configurée pour être vissée sur le support (5).

3. Ensemble connecteur selon la revendication 1 ou 2, dans lequel la seconde section de fixation (13) comprend une seconde portion filetée (14) configurée pour être vissée avec un écrou (28) pour maintenir le contre-connecteur (10) accouplé au connecteur (1).

4. Ensemble connecteur selon l'une quelconque des revendications précédentes, dans lequel ledit au moins un élément de fixation (7) comprend une section d'entretoise (15) entre les première (8) et seconde (13) sections de fixation.

5. Ensemble connecteur selon la revendication 4, dans lequel la section d'entretoise (15) comprend une section d'écrou (30) formant une seule pièce avec ledit au moins un élément de fixation (7).

6. Ensemble connecteur selon la revendication 5, dans lequel la section d'entretoise (15) comprend une section annulaire (16) configurée pour coopérer avec le connecteur (1) pour maintenir le connecteur (1) sur le support (5), la section annulaire (16) formant une seule pièce avec ledit au moins un élément de fixation (7).

7. Ensemble connecteur selon l'une quelconque des revendications précédentes, dans lequel ledit au moins un élément de fixation (7) comprend une extrémité libre (21) située du même côté que la seconde portion filetée (14), ladite extrémité libre (21) comprenant une structure de vissage (22) dont la forme est complémentaire de celle d'une clé ou d'un tournevis.

8. Ensemble connecteur selon l'une quelconque des revendications précédentes, dans lequel le contre-connecteur (10) comprend des moyens de retenue (27) configurés pour retenir une bague (26) sur laquelle un écrou (28) est serré lorsqu'il est vissé sur la seconde portion filetée (14).

9. Ensemble connecteur selon la revendication 8, dans lequel les moyens de retenue (27) maintiennent l'écrou (28) captif.

10. Ensemble connecteur selon l'une quelconque des revendications précédentes, comprenant un joint d'étanchéité (24) inséré entre le boîtier de connecteur (2) et le support (5).

11. Procédé d'assemblage d'un connecteur (1) et d'un contre-connecteur (10) avec un support (5), comprenant les étapes consistant à :
- placer le connecteur (1) sur le support (5),
- fixer le connecteur (1) sur le support (5) à l'aide d'au moins un élément de fixation (7),
- placer le connecteur (1) et le contre-connecteur (10) de sorte qu'au moins une première borne (3) logée dans le connecteur (1) et au moins une deuxième borne logée dans le contre-connecteur (10) soient dans une position de pré-accouplement, et de sorte que le contre-connecteur (10) soit dans une position relative audit au moins un élément de fixation (7), qui est apte à venir en prise avec un organe de fixation (28) sur ledit au moins un élément de fixation (7),
- fixer une première section de fixation (8) dudit au moins un élément de fixation (7) sur le support (5) de manière à fixer le connecteur (1) sur le support (5) et fixer le contre-connecteur (10) sur le connecteur (1) avec l'organe de fixation (8) mis en prise sur une seconde section de fixation (13) dudit au moins un élément de fixation (7).

12. Procédé selon la revendication 11, dans lequel l'organe de fixation (28) est un écrou et dans lequel ladite au moins une première borne (3) et ladite au moins une deuxième borne sont connectées pendant que l'écrou (28) est vissé sur ledit au moins un élément de fixation (7).
